# EUROPÄISCHE PATENTSCHRIFT

(11) **EP 0 583 545 B1**
(45) Veröffentlichungstag und Bekanntmachung des Hinweises auf die Patenterteilung: **23.07.1997**
(21) Anmeldenummer: 93105960.4
(22) Anmeldetag: 13.04.1993
(51) Int. Cl.: G01N 9/14, G01N 33/18

(54) **Vorrichtung zur kontinuierlichen Messung des Konzentrationsgehaltes einer Sole**
Device for continuously measuring the concentration of brine
Dispositif de mesure en continu de la concentration de saumure

(30) Priorität: 13.04.1992 DE 9205131 U
(43) Veröffentlichungstag der Anmeldung: 23.02.1994
(73) Patentinhaber: KUNSTSTOFFVERARBEITUNG REICH GmbH, 86932 Pürgen (DE)
(72) Erfinder: Reich, Georg, D-8911 Pürgen (DE)
(74) Vertreter: Zeitler, Giselher, Dipl.-Ing.

(56) Entgegenhaltungen:
- DE-A- 3 619 418
- DE-A- 3 808 318
- FR-A- 1 603 348
- US-A- 1 632 259

## Beschreibung

Die Erfindung betrifft eine Vorrichtung zur Versorgung von Winterfahrzeugen mit einer Solemischung bei gleichzeitiger Messung des Konzentrationsgehaltes dieser Solemischung.

Derartige Solemischungen werden häufig bei der Feuchtsalzstreuung der Straßenverkehrsdienste im Winterbetrieb eingesetzt. Sie dienen der Prophylaxe gegen Glatteisbildung oder aber dem Auftauen bereits bestehenden Glatteises.

Die bei der Feuchtsalzstreuung eingesetzten Streufahrzeuge werden an Lösestationen oder an Auftankstationen mit der auszubringenden Feuchtsalzlösung befüllt. An diesen Befüllstationen liegt die zum Einsatz gelangende Lösung, beispielsweise in Form einer Kalziumlösung, als gesättigte Lösung vor. Bei oder vor dem Befüllen der Streufahrzeuge ist die Konzentration der auszubringenden Lösung an die jeweils herrschenden Wetter- und Temperaturbedingungen anzupassen. Mit anderen Worten heißt dies, daß die gesättigte Sole je nach Bedarf mit Wasser verdünnt werden muß.

Die auf diese Weise hergestellte Solemischung muß einen zum Einsatz geeigneten Konzentrationsgehalt an Salzen aufweisen. Hierbei ist es wünschenswert, ständig eine Konzentrationsmessung der sich aus der Mischung ergebenden Lösung vorzunehmen, um bei sich ändernden Konzentrationen eine Anpassung der zugeführten Solemenge bzw. der Wassermenge vornehmen zu können.

Es ist bereits eine Vorrichtung zur Mengenmessung bekannt, bei der ausgehend von dem Konzentrationsgehalt der Sole eine Mengenmessung sowohl an der Sole als auch am zuzuführenden Mischwasser durchführbar ist. Diese Vorrichtung weist jedoch den Nachteil auf, daß ein ständig gleichbleibender Konzentrationswert der Sole erforderlich ist, um eine hinreichend genaue Konzentration der erhaltenen Solemischung zu erzielen.

Zur Vermeidung dieses Nachteils ist ebenfalls eine Vorrichtung bekannt, bei der, ausgehend von der Konzentration der Sole im Lagertank, eine Mengenmessung sowohl der Sole als auch des zuzumischenden Wassers durchführbar ist. Anschließend wird zusätzlich eine Konzentrationsmessung der gemischten Lösung über die elektrische Leitfähigkeit der Solemischung vorgenommen. Bei einem eventuellen Abweichen der gewünschten Konzentration der Solemischung wird dann die jeweils zugeführte Menge an Wasser oder Sole nachgeregelt. Es handelt sich hierbei um eine computergesteuerte Vorrichtung, die den Nachteil aufweist, insbesondere im Winter, d.h. also bei niedrigen Außentemperaturen, störungsanfällig zu arbeiten. Zudem weist diese bekannte Vorrichtung einen hohen Preis auf.

Es ist weiterhin eine Vorrichtung bekannt (DE-OS 38 08 318), die dazu dient, einen Verbraucherbehälter eines mit einer Feuchtsalzstreueinrichtung versehenen Winterdienstfahrzeuges mit einer gebrauchsfertigen wässerigen Lösung eines Taumittelkonzentrates vorbestimmter Konzentration zu befüllen. Hierbei ist die Anordnung derart getroffen, daß eine von einem Vorratsbehälter zu einem Mischbehälter führende Konzentratleitung mit einer Flüssigkeitspumpe versehen ist, wobei eine an ein Wasserversorgungsnetz angeschlossene Wasserzuleitung über einen von einer elektronischen Steuereinheit gesteuerten Mengenregler in die Konzentratleitung mündet. Der Mischbehälter ist ausgangsseitig an eine Dichtemeßeinrichtung angeschlossen, deren Ausgang mit einer Abfülleitung verbindbar ist. Sowohl die Konzentratleitung als auch die Wasserzuleitung sind jeweils mit einem Absperrventil versehen.

Bei dieser bekannten Vorrichtung besteht die Dichtemeßeinrichtung aus einer Differenzdruckmeßeinrichtung. Diese mißt an zwei in vertikalem Abstand zueinander befindlichen Meßstellen eines Meßrohres zwei unterschiedliche Drücke, aus deren Differenz sich die Wichte der zu messenden Lösung ergibt. Außerdem ist der Ausgang des Meßrohres mit einem elektronischen Drucksensor ausgerüstet, dessen Meßwerte an die elektronische Steuereinheit gemeldet werden, wobei bei Unterschreiten eines Mindestdruckwertes oder bei Überschreiten eines Höchstdruckwertes das Meßrohr gesperrt wird.

Eine derartige bekannte Vorrichtung mag zwar die ihr zugedachte Funktion erfüllen, jedoch ist sie für den üblicherweise vorherrschenden rauhen Winterbetrieb zu störanfällig. Hinzu kommt außerdem, daß aufgrund der vorgesehenen relativ komplizierten Geräte, wie Differenzdruckmeßeinrichtung, elektronischer Drucksensor usw., keine preiswerte und einfache Herstellung der Vorrichtung möglich ist.

Weiterhin ist aus der FR-A-1 603 348 eine Vorrichtung zum Mischen von Wasser mit einer weiteren Flüssigkeit oder mit Feststoffen innerhalb einer an der Oberseite offenen Wanne bekannt, in welcher der Flüssigkeitsspiegel durch einen Überlauf konstant gehalten wird. Aus der Wanne wird mittels einer Pumpe ein Teilvolumenstrom abgesaugt und einer Dichtemeßeinrichtung mit einer Spindel zugeführt, deren Rücklaufleitung wieder in die Wanne mündet.

Der Erfindung liegt daher zur Beseitigung der geschilderten Nachteile die Aufgabe zugrunde, eine konstruktiv einfache, preiswerte und störunanfällige Versorgungs- und Meßvorrichtung für Solebeschickungsanlagen von Winterstreufahrzeugen zu schaffen, die einfach aufgebaut ist und mit einer hinreichenden Genauigkeit arbeitet.

Die zur Lösung dieser Aufgabe geschaffene Erfindung weist die im Anspruch 1 angegebenen Merkmale auf. Vorteilhafte Ausgestaltungen hiervon sind in den weiteren Ansprüchen beschrieben.
Bei der erfindungsgesmäßen Versorgungs- und Meßvorrichtung ist zwischen der Mischstrecke und der Auslaßleitung eine Abzweigung zur Entnahme eines Teilvolumenstroms der Solemischung und zur Zuführung dieses Teilvolumenstroms zur Meßeinrichtung vorgesehen. Die Meßeinrichtung steht über eine Rücklaufleitung mit der Soleförderpumpe in Verbindung und weist eine Meßspindel auf, die in einem einseitig offenen Innenrohr angeordnet ist.

Zweckmäßigerweise ist das Innenrohr in einem Außenrohr größeren Durchmessers, koaxial zu diesem, angeordnet. Am Innenrohr sind dabei seitliche Öffnungen zum Eintritt der Solemischung vorgesehen. In vorteilhafter Weise führt dies zu einem sanften Umspülen der Meßspindel, ohne daß an dieser vom Spülstrom herrührende Kräfte auftreten, welche die Messung verfälschen würden.

In Ausgestaltung der Erfindung besitzt das Außenrohr an seinem dem Innenrohr zugewandten Ende wenigstens zwei Eintrittsbohrungen für die zu messende Solemischung.

In Weiterbildung der Erfindung ist ein vor der Meßeinrichtung angeordnetes Stellventil zur Regulierung des Volumenstroms der Solemischung vorgesehen. Vorteilhafterweise weist die Meßeinrichtung auch ein Sperrventil auf, mit dem der Zustrom der Solemischung zur Meßeinrichtung wahlweise sperrbar oder zu öffnen ist derart, daß die Messung entweder kontinuierlich oder intermittierend durchführbar ist.

Die erfindungsgemäß geschaffene Vorrichtung weist einen konstruktiv einfachen Aufbau auf, und sie ist preiswert sowie störunanfällig, da auf elektrische oder elektronische Einrichtungen, beispielsweise zur Messung der elektrischen Leitfähigkeit, verzichtet ist.

Die erfindungsgemäße Ausgestaltung zur kontinuierlichen Messung der Dichte ermöglicht schnelle Reaktionen bei einem Abweichen des Istwertes der Solemischungskonzentration vom Sollwert.

Die Vorrichtung ist sowohl zur Neuausrüstung als auch zur Nachrüstung bereits bestehender Befüllanlagen geeignet.

Die Erfindung wird im folgenden anhand der Zeichnung näher erläutert. Diese zeigt in
- Fig. 1: die Vorrichtung gemäß der Erfindung schematisch im Blockschaltbild;
- Fig. 2: schematisch in Seitenansicht die Meßeinrichtung und
- Fig. 3: in vergrößerter Darstellung den Horizontalschnitt gemäß Linie III - III nach Fig. 2.

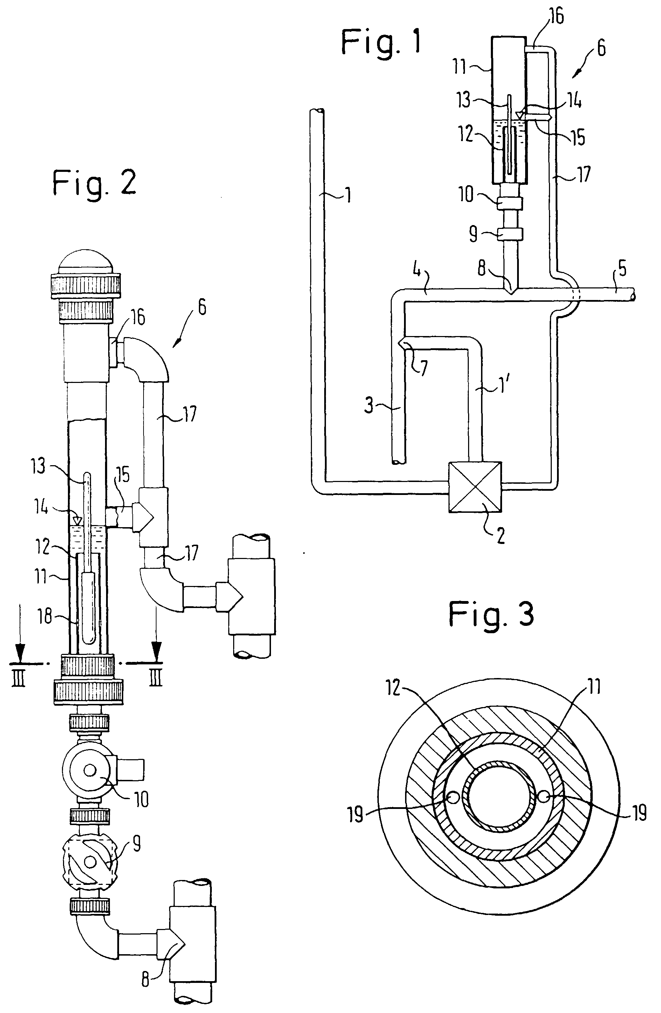

Wie aus Fig. 1 ersichtlich, weist die dargestellte Vorrichtung eine Solezufuhrleitung 1, eine Soleförderpumpe 2, eine Mischwasserzufuhrleitung 3, eine zwischen dieser und der Soleleitung angeordnete Mischstrecke 4 und eine Auslaßleitung 5 für die fertiggemischte Solemischung auf. Zwischen der Mischstrecke 4 und der Auslaßleitung 5 ist eine Meßeinrichtung 6 angeordnet, die im einzelnen aus Fig. 2 ersichtlich ist.

Die Solezufuhrleitung 1 transportiert die gesättigte Sole aus einem nicht dargestellten Lagertank, wobei hierzu die Soleförderpumpe 2 dient. Diese ist an ihrer Saugseite mit der Solezufuhrleitung 1 verbunden und pumpt an ihrer Druckseite die gesättigte Sole über die Leitung 1' in Richtung der Mischstrecke 4.

Vor der Mischstrecke 4 ist eine Abzweigung 7 angeordnet, in die einerseits die Mischwasserzufuhrleitung 3 und andererseits die Leitung 1' mündet. Die Wasserzufuhrleitung 3 kann beheizt ausgebildet sein und steht mit einem nicht dargestellten Wasserschlauch in Verbindung. Das an der Abzweigung 7 aus der Mischwasserzufuhrleitung 3 austretende Mischwasser mischt sich in der Mischstrecke 4 mit der aus der Leitung 1' kommenden gesättigten Sole.

Die auf diese Weise hergestellte Solemischung tritt an der Auslaßleitung 5, beispielsweise zum Befüllen eines Tankfahrzeuges, aus. Zwischen der Mischstrecke 4 und der Auslaßleitung 5 ist eine weitere Abzweigung 8 vorgesehen. An dieser wird ein Teilvolumenstrom der Solemischung zur Dichtemessung abgezweigt. Dieser Teilvolumenstrom tritt über ein Stellventil 9 und ein Sperrventil 10 in die Meßeinrichtung 6 ein.

Das Stellventil 9 dient der Steuerung des Sole-Teilvolumenstroms derart, daß in der Meßeinrichtung 6 ein zur Messung geeigneter Flüssigkeitsspiegel der Solemischung einstellbar ist. Das Sperrventil 10 hindert in seiner einen Stellung den Teilvolumenstrom am Eintritt in die Meßeinrichtung 6 und läßt diesen in seiner anderen Stellung zu, so daß entweder eine kontinuierliche Messung oder eine intermittierende Messung der Dichte der Solemischung durchführbar ist.

Wie deutlich aus Fig. 2 ersichtlich, weist die Meßeinrichtung 6 ein Außenrohr 11 auf, an dessen unterem Ende ein Innenrohr 12, koaxial zum Außenrohr 11, vorgesehen ist. Das Innenrohr 12 besitzt eine Länge, die etwa einem Viertel bis einem Drittel der Länge des Außenrohres 11 entspricht.

Im Innenrohr 12 ist eine Meßspindel 13 vorgesehen, die nach Eintritt der Solemischung in die Meßeinrichtung 6 im Innenrohr 12 frei schwebt, d.h. sich aufgrund des Auftriebs in einer bestimmten Höhenstellung befindet, die für die Dichte und damit die Konzentration der jeweiligen Solemischung charakteristisch ist.

An dem Stellventil 9 ist der Volumenstrom der Solemischung derart eingestellt, daß die in der Meßeinrichtung 6 befindliche Solemischung einen Flüssigkeitsspiegel 14 in Höhe einer Auslaßöffnung 15 ausbildet.

Diese Auslaßöffnung 15 ist am Außenrohr 11 etwa im Bereich der halben Längserstreckung des Außenrohres 11 vorgesehen. Weiterhin ist am Außenrohr 11 eine Entlüftungsbohrung 16 an dem dem Sperrventil 10 entgegengesetzten oberen Ende vorgesehen. Diese Entlüftungsbohrung 16 steht zusammen mit der Auslaßöffnung 15 über eine Rücklaufleitung 17 mit der Förderpumpe 2 in Verbindung.

Nach Öffnen des Sperrventils 10 tritt die Solemischung in die Meßeinrichtung 6 ein und steigt, gesteuert vom Stellventil 9, bis zur Höhe der Auslaßöffnung 15 an. Während dieses Steigvorganges tritt die Solemischung in das Innenrohr 12 über dort seitlich angeordnete Eintrittsöffnungen 18 ein. Die Meßspindel 13 wird angehoben, wobei an dieser mit Ausnahme von Auftriebskräften keine weiteren Kräfte, beispielsweise in Form von Spülkräften, angreifen, da das Innenrohr 12 an seinem unteren Ende verschlossen ist.

Nach Einpegeln des Flüssigkeitsspiegels 14 in Höhe der Auslaßöffnung 15 läßt sich die Dichte der Solemischung an einer Skala der Meßspindel 13 ablesen. Wenn der Istwert der Konzentration der Solemischung vom Sollwert abweicht, kann über eine Mengensteuerung der Sole oder des Mischwassers der Istwert an den Sollwert herangeregelt werden.

Wie aus Fig. 3 ersichtlich, sind am Außenrohr 11 im Bereich seines dem Sperrventil 10 zugewandten Endes 2 Bohrungen 19 vorgesehen, über welche die Solemischung in die Meßeinrichtung 6 eintreten kann. Am direkten Eintritt in das Innenrohr 12 ist sie jedoch gehindert.

Obwohl nicht näher dargestellt, kann das obere Ende des Außenrohres 11 noch ein federbelastetes Belüftungsventil aufweisen, das derart eingestellt ist, daß es öffnet und den Zutritt von Luft in das unter Unterdruck stehende Außenrohr 11 ermöglicht, wenn das Vakuum im Außenrohr 11 zu stark wird und dadurch den Abfluß der zu messenden Solemischung aus der Auslaßöffnung 15 behindert.

Hinsichtlich vorstehend im einzelnen nicht näher erläuterter Merkmale der Erfindung wird im übrigen ausdrücklich auf die Ansprüche und die Zeichnung verwiesen.

## Patentansprüche

1. Winterstreufahrzeug-Versorgungsvorrichtung zur Versorgung von Winterstreufahrzeugen mit einer Solemischung bei gleichzeitiger Messung des Konzentrationsgehaltes dieser Solemischung, mit einer Solezufuhrleitung (1, 1'), einer Soleförderpumpe (2) in der Solezufuhrleitung (1, 1'), einer Mischwasserzufuhrleitung (3), einer der Solezufuhrleitung (1, 1') und der Mischwasserzufuhrleitung (3) nachgeschaltete Mischstrecke (4) für die Sole und das Mischwasser, einer Solemischungsauslaßleitung (5), einer Meßeinrichtung (6) zur, vorzugsweise kontinuierlichen, Messung der Dichte der Solemischung, die zwischen der Mischstrecke (4) und der Auslaßleitung (5) angeordnet ist und eine Meßspindel (13) aufweist, die in einem einseitig offenen Innenrohr (12) angeordnet ist, wobei das Innenrohr (12) in einem Außenrohr (11) größeren Durchmessers, koaxial zu diesem, angeordnet ist und seitliche Öffnungen (18) zum Eintritt der Solemischung aufweist, einer zwischen der Mischstrecke (4) und der Auslaßleitung (5) vorgesehenen Abzweigung (8) zur Entnahme eines Teilvolumenstroms der Solemischung sowie zur Zufuhr dieses Teilvolumenstroms zur Meßeinrichtung (6) und einer die Meßeinrichtung (6) direkt mit der Soleförderpumpe (2) verbindenden Rücklaufleitung (17).

2. Vorrichtung nach Anspruch 1, dadurch gekennzeichnet, daß das Außenrohr (11), insbesondere im Bereich seiner halben Längserstreckung, eine Auslaßöffnung (15) aufweist, aus der die gemessene Solemischung über die Rücklaufleitung (17) der Soleförderpumpe (2) zuführbar ist.

3. Vorrichtung nach Anspruch 1 oder 2, dadurch gekennzeichnet, daß das Außenrohr (11) an seinem dem Innenrohr (12) zugewandten Ende wenigstens zwei Bohrungen (19) aufweist, durch welche die zu messende Solemischung in die Meßeinrichtung (6) eintritt.

4. Vorrichtung nach einem der vorhergehenden Ansprüche, dadurch gekennzeichnet, daß das Außenrohr (11) an seinem dem Innenrohr (12) abgewandten Ende eine Entlüftungsbohrung (16) aufweist, die mit der Rücklaufleitung (17) in Verbindung steht.

5. Vorrichtung nach einem der vorhergehenden Ansprüche, dadurch gekennzeichnet, daß der die Meßeinrichtung (6) beaufschlagende Volumenstrom der Solemischung durch ein vor der Meßeinrichtung (6) angeordnetes Stellventil (9) einstellbar ist.

6. Vorrichtung nach einem der vorhergehenden Ansprüche, dadurch gekennzeichnet, daß vor der Meßeinrichtung (6) ein den Zustrom zur Meßeinrichtung (6) öffnendes bzw. unterbrechendes Sperrventil (10) vorgesehen ist.

7. Vorrichtung nach einem der vorhergehenden Ansprüche, dadurch gekennzeichnet, daß die Mischstrecke (4) als Mischkammer ausgeführt ist.

8. Vorrichtung nach einem der vorhergehenden Ansprüche, dadurch gekennzeichnet, daß das Außenrohr (11) wenigstens an einem Teilbereich zur Sichtkontrolle durchsichtig ausgebildet ist.

## Claims

1. A winter spreading truck supply apparatus for supplying winter spreading trucks with a brine mixture while simultaneously measuring the concentration content of said brine mixture, having a brine supply pipe (1, 1'), a brine feed pump (2) in the brine supply pipe (1, 1'), a mixing water supply pipe (3), a mixing section (4) for the brine and mixing water following the brine supply pipe (1) and the mixing water supply pipe (3), a brine mixture discharge pipe (5), a measuring device (6) for, preferably continuously, measuring the density of the brine mixture, said device being disposed between the mixing section (4) and the discharge pipe (5) and having a measuring spindle (13) disposed in an inside pipe (12) open on one side, the inside pipe (12) being disposed in an outside pipe (11) of greater diameter, coaxially thereto, and having lateral openings (18) for admitting the brine mixture, a branch (8) provided between the mixing section (4) and the discharge pipe (5) for removing a partial volume flow of the brine mixture and supplying said partial volume flow to the measuring device (6), and a return pipe (17) connecting the measuring device (6) directly with the brine feed pump (2).

2. The apparatus of claim 1, characterized in that the outside pipe (11) has a discharge port (15), in particular in the area of one half its longitudinal extension, for feeding the measured brine mixture to the brine feed pump (2) via the return pipe (17).

3. The apparatus of claim 1 or 2, characterized in that the outside pipe (11) has at least two bores (19) at its end facing the inside pipe (12) through which the brine mixture to be measured enters the measuring device (6).

4. The apparatus of any of the above claims, characterized in that the outside pipe (11) has a ventilation bore (16) at its end facing away from the inside pipe (12), said bore communicating with the return pipe (17).

5. The apparatus of any of the above claims, characterized in that the volume flow of brine mixture acting upon the measuring device (6) is adjustable by a control valve (9) disposed before the measuring device (6).

6. The apparatus of any of the above claims, characterized in that the measuring device (6) is preceded by a stop valve (10) opening or interrupting the influx to the measuring device (6).

7. The apparatus of any of the above claims, characterized in that the mixing section (4) is executed as a mixing chamber.

8. The apparatus of any of the above claims, characterized in that the outside pipe (11) is transparent at least in a partial area for visual checking.

## Revendications

1. Dispositif d'alimentation pour un véhicule d'épandage d'hiver pour alimenter des véhicules d'épandage d'hiver avec un mélange de saumure, tout en mesurant simultanément la concentration de ce mélange de saumure, comportant une conduite d'amenée de saumure (1, 1'), une pompe de convoyage (2) dans la conduite d'amenée de saumure (1, 1'), une conduite d'amenée d'eau de mélange (3), un trajet de mélange (4) prévu pour la saumure et pour l'eau de mélange et agencé en aval de la conduite d'amenée de saumure (1) et de la conduite d'amenée d'eau de mélange (3), une conduite de sortie de mélange de saumure (5), un dispositif de mesure (6) pour mesurer, de préférence en continu, la concentration du mélange de saumure, qui est agencé entre le trajet de mélange (4) et la conduite de sortie (5) et qui présente une broche de mesure (13) agencée dans un tube intérieur (12) ouvert sur un côté, le tube intérieur (12) étant agencé dans un tube extérieur (11) d'un diamètre supérieur et coaxial à celui-ci et présentant des ouvertures latérales (18) pour l'entrée du mélange de saumure, et comportant un embranchement (8) prévu entre le trajet de mesure (4) et la conduite de sortie (5) pour prélever un courant volumétrique partiel du mélange de saumure, ainsi que pour amener ce courant volumétrique partiel jusqu'au dispositif de mesure (6), et comportant une conduite de retour (17) qui relie le dispositif de mesure (6) directement à la pompe de convoyage (2).

2. Dispositif selon la revendication 1, caractérisé en ce que le tube extérieur (11) présente, en particulier dans la région de la moitié de son extension longitudinale, une ouverture de sortie (15) hors de laquelle le mélange de saumure mesuré peut être amené via la conduite de retour (17) à la pompe de convoyage (2).

3. Dispositif selon l'une ou l'autre des revendications 1 et 2, caractérisé en ce que le tube extérieur (11) présente à son extrémité orientée vers le tube intérieur (12) au moins deux perçages (19) à travers lesquels le mélange de saumure à mesurer entre dans le dispositif de mesure (6).

4. Dispositif selon l'une quelconque des revendications précédentes, caractérisé en ce que le tube extérieur (11) présente à son extrémité détournée du tube intérieur (12) un perçage de mise à l'air (16) qui est en liaison avec la conduite de retour (17).

5. Dispositif selon l'une quelconque des revendications précédentes, caractérisé en ce que le courant volumétrique du mélange de saumure qui atteint le dispositif de mesure (6) est réglable par une vanne de réglage (9) agencée en avant du dispositif de mesure (6).

6. Dispositif selon l'une quelconque des revendications précédentes, caractérisé en ce qu'il est prévu en avant du dispositif de mesure (6) une vanne d'obturation (10) qui ouvre ou qui interrompt le courant vers le dispositif de mesure (6).

7. Dispositif selon l'une quelconque des revendications précédentes, caractérisé en ce que le trajet de mesure (4) est réalisé sous forme d'une chambre de mélange.

8. Dispositif selon l'une quelconque des revendications précédentes, caractérisé en ce que le tube extérieur (11) est réalisé de façon transparente au moins sur une région partielle pour effectuer un contrôle visuel.
